# EUROPÄISCHE PATENTSCHRIFT

(11) **EP 2 367 026 B1**
(45) Veröffentlichungstag und Bekanntmachung des Hinweises auf die Patenterteilung: **30.08.2017**
(21) Anmeldenummer: 11001978.3
(22) Anmeldetag: 10.03.2011
(51) Int. Cl.: G01S 19/36, G01S 19/20, G01S 19/46

(54) **Vorrichtung und Verfahren zur Bestimmung von Position und/oder Geschwindigkeit eines Geräts in einem System zur Satellitennavigation**
Device and method for determining the position and/or speed of a device in a satellite navigation system
Dispositif et procédé de détermination de la positon et/ou de la vitesse d'un appareil dans un système pour la navigation par satellite

(30) Priorität: 13.03.2010 DE 102010011263
(43) Veröffentlichungstag der Anmeldung: 21.09.2011
(73) Patentinhaber: MBDA Deutschland GmbH, 86529 Schrobenhausen (DE)
(72) Erfinder: Schöttl, Alfred, 80809 München (DE)
(74) Vertreter: Isarpatent

(56) Entgegenhaltungen:
- DE-A1-102008 036 145
- GB-A- 2 273 218
- US-A1- 2002 183 926
- US-A1- 2007 222 674
- US-A1- 2007 252 754
- US-A1- 2008 291 079

## Beschreibung

### TECHNISCHES GEBIET

Die vorliegende Erfindung betrifft eine Vorrichtung zur Bestimmung von Position und/oder Geschwindigkeit eines Geräts in einem System zur Satellitennavigation. Sie betrifft weiterhin ein Verfahren zur Bestimmung von Position und/oder Geschwindigkeit eines Geräts in einem System zur Satellitennavigation.

Zur Bestimmung der Position oder Geschwindigkeit eines Geräts mit Hilfe von Navigationsdaten, die von Satelliten ausgestrahlt werden, ist es erforderlich, dass die auf die Satelliten gerichtete Antenne eine hohe Empfindlichkeit in Richtung des Satelliten beziehungsweise der Satelliten aufweist. Für eine vollständige Positionsbestimmung sind dabei in der Regel zumindest vier Satelliten erforderlich. Je nach Standort können bis zu zwölf Satelliten über dem Horizont auffassbar sein. Sind die Signale eines Navigationssatelliten durch Antenne und Empfänger auffassbar, so wird der Satellit als "sichtbar' bezeichnet.

Bei einem Gerät, das in der Regel in einer bevorzugten Orientierung betrieben wird, zum Beispiel einem Navigationssystem in einem Mobiltelefon oder in einem bodengebundenen Fahrzeug, kann es beispielsweise genügen, auf der nach oben gewandten Seite des Geräts eine Antenne mit einem sensitiven Bereich von ca. 180° anzubringen und somit den Himmelsbereich über dem Horizont vollständig abzudecken. Kann die Antenne nicht auf diese Weise angebracht werden oder ändert sich die Orientierung des Geräts stark (wird zum Beispiel das Mobiltelefon mit der Tastatur nach unten gehalten), so ist die Positionsbestimmung stark eingeschränkt.

Unter einem sensitiven Bereich ist der Bereich der Antennencharakteristik mit ausreichender Empfindlichkeit zu verstehen.

Bei Geräten, die in stark unterschiedliche Richtungen des Raums orientiert werden können, zum Beispiel bei Flugkörpern oder anderen Fahrzeugen, ist es zudem schwierig, die Abschattung von Satellitennavigationssignalen durch das Gerät selbst zu vermeiden.

Des Weiteren können Empfänger für Navigationsdaten eines Satellitennavigationssystems gestört werden durch Reflexionen der Signale von Wänden oder vom Boden. Aber auch Störsender können Satellitennavigationssignale erheblich stören. Antennen und die daran angeschlossenen Empfänger reagieren folglich empfindlich gegenüber natürlichen Störungen, etwa Reflexionen des Navigationssignals von Wänden und Böden, sowie gegenüber künstlichen Störungen, die etwa von Störsendern ausgestrahlt werden können. Ein großer sensitiver Antennenbereich sorgt zwar für einen großen Richtungsbereich, aus dem die Navigationssignale aufgefasst werden, jedoch auch für einen großen Bereich, aus dem Störungen die Positionsbestimmung beeinflussen können. So ist es keineswegs optimal, Antennen mit einer kugelförmigen Charakteristik von 360° sensitivem Bereich, sogenannter Rundumsicht, einzusetzen.

### STAND DER TECHNIK

Idealerweise sollte die Satellitenantenne zum Empfang der Navigationsdaten an einem Gerät so angeordnet sein, dass sie in Richtung der Satelliten eine hohe und in alle anderen Richtungen eine niedrige Empfindlichkeit aufweist. Dies ist jedoch bei bewegten Geräten, zum Beispiel bei Flugkörpern, nicht realisierbar, da die am bewegten Gerät angeordnete Antenne je nach Lage des Geräts im Raum in unterschiedliche Richtungen ausgerichtet sein kann. Abhilfe könnte hier eine Antenne mit kugelförmiger Antennencharakteristik schaffen, die an einer exponierten Position des Geräts angebracht ist. Aber auch hier kann eine vollständig omnidirektionale Empfangscharakteristik nicht realisiert werden, da das Gerät selbst einen Teil der Antennenoberfläche abschattet. Hinzu kommt, dass die Störanfälligkeit einer derartigen kugelförmigen Antenne zunimmt, da Störungen aus allen Richtungen mit hoher Empfindlichkeit von der Antenne eingefangen werden. Insbesondere bei militärischen Anwendungen, wo mit aktiven Störmaßnahmen zu rechnen ist, sind Antennen mit kugelförmiger Charakteristik daher ungeeignet.

Eine andere Alternative wäre die Verwendung von mehreren Antennen, die an unterschiedlichen Stellen des Geräts angebracht sind und zusammengeschaltet oder umschaltbar betrieben werden, oder von einer strukturintegrierten Antenne, die zumindest an einen Teil der Außenkontur des Geräts angepasst ist. Abgesehen davon, dass eine derartige Antennenkonstruktion sehr aufwendig und damit teuer ist, ist auch bei einer solchen Antennenanordnung aus mehreren Antennen oder aus einer strukturintegrierten Antenne mit einer hohen Störempfindlichkeit zu rechnen.

Schließlich wäre es auch noch möglich, sogenannte "Smart Antennas" zu verwenden. Dabei handelt es sich um eine Vielzahl von kleinen Antennen- und Verstärkereinheiten, die am Gerät strukturiert angebracht werden (zum Beispiel in einer Gitterstruktur). Durch mathematische Verfahren kann durch Gewichtung der vielen Antennensignale ein virtuelles Antennensignal errechnet werden. Das virtuelle Antennensignal kann interpretiert werden als das von einer virtuellen Antenne empfangene Signal. Durch eine zeitlich veränderliche Gewichtung kann auch die Charakteristik der virtuellen Antenne beeinflusst werden; so kann sie zum Beispiel so gestaltet werden, dass Bereiche hoher Empfindlichkeit, sogenannte "Keulen", in Richtung der Navigationssatelliten zeigen, während andere Richtungen gedämpft werden. Dadurch ist es zwar möglich, den Empfang aus ungünstigen Richtungen zu dämpfen und somit die Gefahr, dass Reflexionen von der Antenne aufgefasst werden, zu reduzieren, die Störempfindlichkeit gegenüber Störsendern hoher Leistung ist jedoch technisch bedingt sehr stark ausgeprägt.

Alle vorgenannten Verfahren des Standes der Technik besitzen somit individuelle Nachteile. Es können zum Teil Abschattungen durch das Gerät, an welchem die Antenne(n) angebracht ist beziehungsweise sind, nicht vermieden werden. Auch ist teilweise die Störempfindlichkeit durch einen zu großen sensitiven Bereich erhöht.

Es ist zwar grundsätzlich auch denkbar, die Antenne oder die Antennen nachführbar am Gerät anzubringen, doch ist dies mit einem sehr hohen Kostenaufwand und Regelungsaufwand verbunden. Auch ist die technische Realisierung insbesondere bei fliegendem Gerät sehr aufwendig.

Aus der GB 2 273 218 A ist ein Satellitennavigationssystem für Fahrzeuge bekannt, bei welchem das Fahrzeug an der Oberseite zwei oder mehr Satellitenantennen und Navigationsempfänger aufweist. Zum Zwecke der Erzielung eines präziseren Navigationsergebnisses werden alle von den im Fahrzeug vorgesehenen Navigationsempfängern ermittelten Pseudorange-Werte zur Bildung eines Mittelwertes daraus herangezogen und die Navigationsbestimmung erfolgt dann auf der Grundlage des so bestimmten Pseudorange-Mittelwertes.

Aus der US 2007/0222674 A1 ist ein automatisches Positionierungs- und Bahnerfolgungsverfahren für Schiffscontainer bekannt. Dabei werden Signale eines Inertialmesssystems, von Bewegungssensoren und eines Differential-GPS verwendet.

Aus der US 2007/0252754 A1 sind eine Vorrichtung und ein Verfahren zur Navigation bekannt, bei welchem in einem sich bewegenden System GPS-Daten und Daten einer Koppelnavigation miteinander verknüpft werden

### DARSTELLUNG DER ERFINDUNG

Der Erfindung liegt die Aufgabe zugrunde, eine gattungsgemäße Vorrichtung sowie ein gattungsgemäßes Verfahren anzugeben, die es gestatten, auch bei bewegten Objekten, die in unterschiedliche Richtungen des Raums orientiert sind, einen hochempfindlichen und hochgenauen Empfang von Satellitennavigationssignalen zu ermöglichen, ohne dass dadurch die Störempfindlichkeit des Empfangs von Navigationssignalen erhöht wird.

Die auf die Vorrichtung gerichtete Aufgabe wird durch die Vorrichtung mit den Merkmalen des Patentanspruchs 1 gelöst.

Diese erfindungsgemäße Vorrichtung zur Bestimmung von Position und/oder Geschwindigkeit eines Geräts in einem System zur Satellitennavigation, das eine Mehrzahl von Navigationssatelliten aufweist, die Navigationsdaten enthaltende Funksignale aussenden, ist versehen mit zumindest zwei Antennen zum Empfängen der die Navigationsdaten enthaltenden Funksignale, wobei die Antennen sensitive Empfangsbereiche aufweisen, die in unterschiedliche Richtungen ausgerichtet sind, sodass die Antennen jeweils Funksignale aus einer anderen der unterschiedlichen Richtungen empfangen. Diese erfindungsgemäße Vorrichtung zeichnet sich dadurch aus, dass jeder Antenne ein Empfänger für die Navigationsdaten enthaltende Funksignale zugeordnet ist, der die Navigationsdaten aus den empfangenen Funksignalen ermittelt; dass eine Verarbeitungseinheit vorgesehen ist, der die von den Empfängern ermittelten Daten zugeführt werden und die zur Bestimmung von Position und/oder Geschwindigkeit aus diesen Daten und zur Übergabe der Positions- und/oder Geschwindigkeitsdaten an eine Ausgabeeinrichtung ausgebildet ist, und dass die Verarbeitungseinheit eine Fusionseinrichtung zur Datenfusion der von den Empfängern zugeführten Daten aufweist. Durch das Vorsehen von Integrationsmonitoren in der Verarbeitungseinheit für die empfangenen Navigationsdaten und durch die Eigenschaft der Integrationsmonitore, die der Verarbeitung zugeführten Bahndaten eines jeweiligen Satelliten einem Integritätstest zu unterziehen und sie dabei auf Plausibilität zu untersuchen, wird es möglich, eine Gewichtung der empfangenen Navigationssignale bei der Auswertung vorzunehmen.

Die Navigationsdaten enthaltenden Funksignale der sichtbaren Navigationssatelliten werden somit erfindungsgemäß von einer Mehrzahl von Antennen-Empfänger-Einheiten erfasst und aus diesen erfassten Signalen werden die Navigationsdaten ermittelt und die ermittelten Daten aller Empfänger werden einer Verarbeitungseinheit zugeführt. Die in der Verarbeitungseinheit durchgeführte Datenfusion ermöglicht es, aus den von den einzelnen Empfängern ermittelten Navigationsdaten nur jene zu verwerten, die nicht oder nur sehr gering gestört sind und deren Signalqualität die geforderte Güte aufweist.

Durch die Verwendung einer Mehrzahl von Antennen-Empfänger-Einheiten deren jeweilige Antennencharakteristik auf einen definierten sensitiven Bereich beschränkt ist, der beispielsweise unter 180° liegt, wird erreicht, dass sowohl Signale, als auch ungewollte Störungen, nur aus dieser Richtung empfangen werden können. Die Antennen sind an geeigneten Stellen des Geräts so angebracht, dass sie unterschiedliche Raumrichtungen abdecken. Es ist daher auf einfache Weise möglich, Daten bestimmter Antennen-Empfänger-Einheiten, die hohe Störanteile und/oder geringe Signalqualität aufweisen, nicht oder nur sehr gering gewichtet bei der Datenfusion zu berücksichtigen.

Bei der Realisierung dieser Vorrichtung kann beispielsweise auf preisgünstige Navigationsempfänger zurückgegriffen werden, die neben der Basisfunktionalität für den Navigationsdatenempfang lediglich die Möglichkeit der Ausgabe der Satelliten-Pseudorange-Information besitzen.

Vorzugsweise sind die Antennen so ausgestaltet und angeordnet, dass die jeweiligen sensitiven Empfangsbereiche der Antennen einander überlappen. Hierdurch wird ermöglicht, dass ein Satellit durch mehrere Antennen-Empfänger Einheiten aufgefasst wird, wodurch die Genauigkeit der Positionsbestimmung beziehungsweise Geschwindigkeitsbestimmung erhöht wird. Nachteilig kann hierbei jedoch sein, dass ein im Überlappungsbereich gelegener Störsender beide Antennen-Empfänger-Einheiten stört.

Daher ist es dann, wenn mit Störsendern oder mit dem Auftreten anderer Störungen (zum Beispiel Reflexionen) zu rechnen ist, von Vorteil, wenn die Antennen so ausgestaltet und angeordnet sind, dass die jeweiligen sensitiven Empfangsbereiche der Antennen einander nicht überlappen.

Besonders vorteilhaft ist es, wenn die jeweiligen Empfänger so ausgebildet sind, dass sie aus den ermittelten Navigationsdaten die Entfernung zu dem jeweiligen Navigationssatelliten als sogenannte Pseudoranges bestimmen und diese der Verarbeitungseinheit zuführen. Diese fusioniert die erhaltenen Daten dann und bestimmt aus dieser Datenfusion die aktuelle Position des Geräts beziehungsweise dessen Geschwindigkeit. Insbesondere bei der Verwendung von kostengünstigen Empfängern ist diese Lösung technisch einfacher und kostengünstiger zu realisieren, als zum Beispiel eine HF-technisch anspruchsvolle Antennenumschaltung oder Antennenzusammenschaltung.

Besonders vorteilhaft ist es, wenn die Empfänger so ausgebildet sind, dass sie sich gegenseitig synchronisieren.

Vorzugsweise sind die Empfänger so ausgebildet, dass sie die zeitlichen Änderungen der jeweiligen Pseudoranges als sogenannte Deltaranges bestimmen und diese Deltaranges der Verarbeitungseinheit zuführen. Durch Verwendung dieser zusätzlichen Werte im Fusionsalgorithmus kann die Genauigkeit der Messung gesteigert werden. Die das Verfahren betreffende Lösung der Aufgabe wird erzielt durch das im Patentanspruch 7 angegebene Verfahren.

Dieses erfindungsgemäße Verfahren zur Bestimmung von Position und/oder Geschwindigkeit eines Geräts in einem System zur Satellitennavigation, insbesondere mit einer erfindungsgemäßen Vorrichtung, weist die folgenden Schritte auf:
a) Empfangen von Navigationsdaten enthaltenden Funksignalen mehrerer Satelliten durch zumindest zwei jeweils einer separaten Antenne zugeordnete Empfänger;
b) Ermitteln der Navigationsdaten aus den vom jeweiligen Empfänger empfangenen Funksignalen;
c) Bestimmen der Entfernungen zu dem jeweiligen Satelliten als sogenannte Pseudoranges aus den jeweils im Schritt b) ermittelten Navigationsdaten;
d) Bestimmen der Bahndaten des zugehörigen Satelliten für den Zeitpunkt des Empfangs der Navigationsdaten;
e) Fusionieren der aus den Navigationsdaten der unterschiedlichen Empfänger bestimmten Pseudoranges eines jeweiligen Satelliten zu einer fusionierten Pseudorange für die jeweiligen Satelliten und
f) Bestimmen von Position und/oder Geschwindigkeit des Geräts aus den Bahndaten und den fusionierten Pseudoranges der jeweiligen Satelliten,
wobei die im Schritt d) bestimmten Bahndaten eines jeweiligen Satelliten einem Integritätstest unterzogen werden, in welchem sie auf Plausibilität untersucht werden, und wobei die aus den Funksignalen des jeweiligen Satelliten vom jeweiligen Empfänger ermittelten Navigationsdaten und die daraus bestimmten Pseudoranges nur dann zur Weiterverarbeitung in den darauffolgenden Schritten verwendet werden, wenn sie den Integritätstest bestanden haben.

Dieses erfindungsgemäße Verfahren ermöglicht es mit der kostengünstigen erfindungsgemäßen Vorrichtung auf einfache und zuverlässige Weise Position und/oder Geschwindigkeit des Geräts mit hoher Genauigkeit zu bestimmen, da durch Reflexionen oder durch Störsender hervorgerufene Störungen bei der Bestimmung nahezu ohne Einfluss sind oder sich nur mit vernachlässigbaren Einfluss auf das Ergebnis auswirken. Dabei wird die Qualität des Ergebnisses der Positionsbeziehungsweise Geschwindigkeits-Bestimmung weiter erhöht, da Fehlmessungen von vornherein aus der Ergebnisbestimmung ausgeschlossen werden.

Besonders vorteilhaft ist es, wenn die Datenfusion im Schritt e) durch einen sogenannten "Tightly-Couple-Algorithmus" erfolgt. Auch hierdurch kann die Ergebnisqualität deutlich heraufgesetzt werden.

Vorzugsweise werden bei der Datenfusion im Schritt e) Daten weiterer Sensoren, bevorzugt von Drehraten- und/oder Beschleunigungssensoren, berücksichtigt. Auch durch diese Maßnahme wird das Ergebnis deutlich verbessert.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: die Anbringung nur einer Antenne am Gerät gemäß dem Stand der Technik;
- Fig. 2: die Anbringung nur einer Antenne mit kugelförmiger Empfangscharakteristik am Gerät gemäß dem Stand der Technik;
- Fig. 3: eine erfindungsgemäße Anordnung von zwei Antenne am Gerät;
- Fig. 4: eine erfindungsgemäße Anordnung von drei Antennen am Gerät; und
- Fig. 5: eine Strukturdarstellung des Hardwareaufbaus einer erfindungsgemäßen Vorrichtung.

### DARSTELLUNG VON BEVORZUGTEN AUSFÜHRUNGSBEISPIELEN

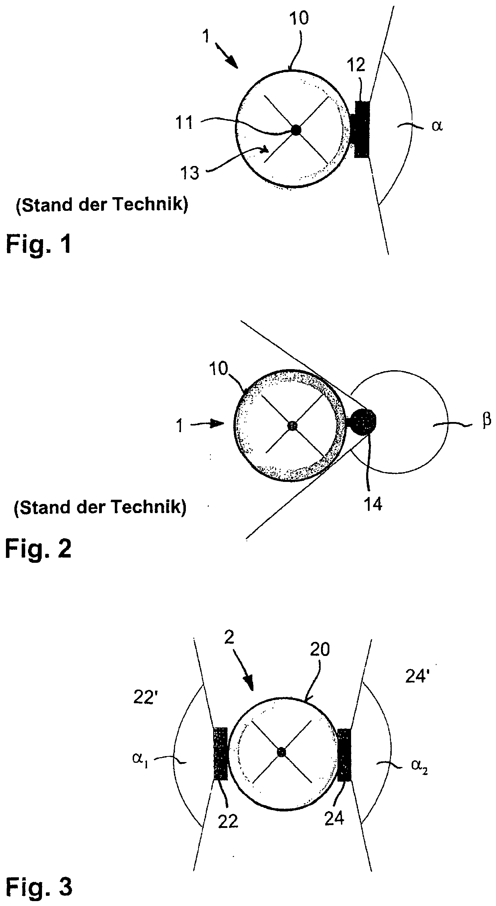

Fig. 1 zeigt beispielhaft eine Frontalansicht auf den zylinderförmigen Rumpf 10 eines Flugkörpers 1, zum Beispiel einer Miniatur-Flugkörper-Drohne, mit einer Antennenanordnung 12 gemäß dem Stand der Technik. Dieser Flugkörper ist so entworfen, dass er während des Fluges eine beliebige Orientierung im Raum einnehmen kann. In der in Fig. 1 gezeigten Darstellung ist der Flugkörper mit einer einzigen Antenne 12 an seiner Außenseite versehen, die einen sensitiven Bereich von weniger als 180° aufweist. Der Empfangswinkel α des sensitiven Bereichs beträgt in diesem Beispiel etwa 160°. Der Flugkörper nimmt eine Fluglage ein, bei der die Antenne 12 auf der Steuerbordseite des Flugkörpers 1 gelegen ist und sich somit der sensitive Bereich zur Seite erstreckt. In anderen Fluglagen, zum Beispiel im Schwebeflug, zeigt der Rumpf mit der Längsachse des Flugkörpers senkrecht nach oben; der Flugkörper kann aber während seiner Mission eine Vielzahl anderer Fluglagen einnehmen, so dass die Antenne 12 ständig in eine andere Richtung ausgerichtet sein kann. Die Anbringung der Antenne an einer exponierten Lage, zum Beispiel an der Spitze 11 des Flugkörpers ist häufig nicht möglich, da sich dort, wie im gezeigten Beispiel, der nur schematisch dargestellte Propeller 13 befindet.

Wird die Antenne 12, wie im gezeigten Beispiel, mit ihrem sensitiven Bereich von weniger als 180° in der Nähe des Rumpfes 10 angebracht, so ist häufig über die Hälfte des Himmelsbereichs über dem Horizont für den sensitiven Bereich der Antenne nicht sichtbar. Die Anzahl der potentiell empfangbaren Satelliten wird dadurch deutlich reduziert.

Auch die in Fig. 2 dargestellte alternative Ausstattung eines Flugkörpers mit einer eine kugelförmige Charakteristik aufweisenden Helixantenne 14 gemäß dem Stand der Technik mit einem sensitiven Bereich von fast 360°, kann nur eine begrenzte Verbesserung des Satellitenempfangs liefern, da der nutzbare Öffnungswinkel β des sensitiven Bereichs aufgrund der Abschattung durch den Rumpf 10 des Flugkörpers 1 deutlich eingeschränkt wird.

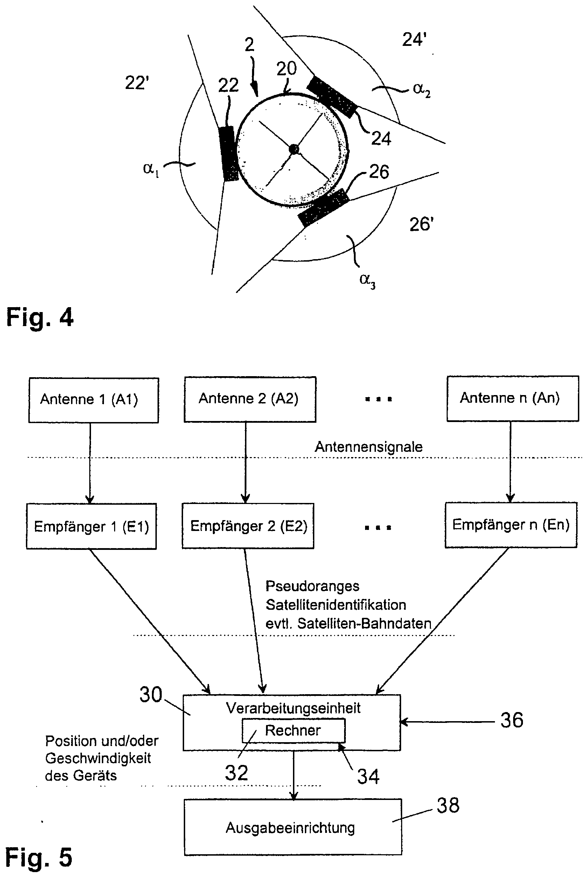

Fig. 3 und Fig. 4 zeigen zwei erfindungsgemäße Vorrichtungen mit zwei beziehungsweise drei Antennen.

Bei der Ausführungsform gemäß Fig. 3 ist das Gerät 2 ebenfalls von einem Flugkörper mit einem Rumpf 20 gebildet. Dieser Flugkörper entspricht beispielsweise dem in Fig. 1 und in Fig. 2 dargestellten Flugkörper. Das Gerät 2 ist aber nicht auf Flugkörper beschränkt, sondern kann beispielsweise auch ein beliebiger Satellitennavigationsempfänger oder ein Mobiltelefon mit integriertem Satellitennavigationsempfänger sein.

Im Beispiel der Fig. 3 sind zwei Antennen 22, 24 vorgesehen, die auf voneinander abgewandten Seiten des Geräts 2 angebracht sind und jeweils in 180° entgegengesetzte Richtungen ausgerichtet sind. Jede der beiden Antennen 22, 24 weist einen sensitiven Bereich 22', 24' von weniger als 180° auf, wobei im gezeigten Beispiel der Empfangswinkel α₁, α₂ des jeweiligen sensitiven Bereichs etwa 160° entspricht. Die beiden sensitiven Bereiche 22', 24' überlappen einander nicht.

Die Ausführungsform der Fig. 4 zeigt das Gerät 2 mit drei am Rumpf 20 über den Umfang verteilt angeordneten Antennen 22, 24, 26, die jeweils in eine andere Richtung ausgerichtet sind. Der Abstand zwischen den drei Antennen 22, 24, 26 beträgt jeweils 120°. Der Öffnungswinkel α₁, α₂, α₃ des jeweiligen sensitiven Bereichs 22', 24', 26' beträgt wie im Beispiel der Fig. 3 jeweils etwa 160°. Bei diesem Beispiel überlappen sich die sensitiven Bereich somit in der Ferne geringfügig. Durch diese Überlappung oder Überdeckung der sensitiven Bereiche 22', 24', 26' entsteht die Möglichkeit, dass ein Satellit durch mehrere Antennen und damit durch mehrere den Antennen jeweils zugeordneten Empfänger aufgefasst wird. Dies erhöht die Genauigkeit und die Verfügbarkeit der ermittelten Position. Ein Störsender, der aus der Richtung des überlappenden sensitiven Bereichs sendet würde allerdings beide den betroffenen Antennen zugeordnete Empfänger stören. Überlappen sich die Bereiche hingegen nicht, wie im Beispiel der Fig. 3, so ist die gleichzeitige Störung mehrerer Empfänger durch einen Störsender nahezu ausgeschlossen.

Die Struktur der erfindungsgemäßen Vorrichtung und auch das erfindungsgemäße Verfahren werden nachstehend anhand der Fig. 5 näher erläutert.

Jede der Antennen A1 bis An ist mit einem jeweils zugeordneten Empfänger E1 bis En für Navigationsdaten verbunden. Der Empfänger wertet die von der jeweiligen Antenne eingefangenen und an den zugeordneten Empfänger weitergeleiteten Funksignale mit den darin enthaltenen Navigationsdaten aus und ermittelt daraus die sogenannten Pseudoranges, also die gemessenen Entfernungen zwischen der Antenne und den von dieser Antenne empfangenen Navigationssatelliten. Diese Pseudoranges werden zusammen mit den ebenfalls von der Antenne eingefangenen Satellitenidentifikationsdaten einer Verarbeitungseinheit 30 zugeführt. Des Weiteren werden der Verarbeitungseinheit 30 von dem jeweiligen Empfänger empfangene Daten des Navigationssatelliten weitergeleitet, die zur Bestimmung der zugehörigen Satellitenposition erforderlich sind, zum Beispiel die sogenannten Ephemeriden oder aber bereits die Satellitenpositionen, falls der Empfänger selbst in der Lage ist, diese zu ermitteln.

Die Verarbeitungseinheit 30 weist einen Rechner 32 auf, dem die von den Empfängern E1 bis En an die Verarbeitungseinheit 30 übermittelten Daten zugeführt werden und der mittels einer geeigneten Software dazu ausgebildet ist, diese zugeführten Daten zu fusionieren. Der Rechner 32 bildet somit eine Datenfusionseinrichtung 34.

Im Rechner 32, an den sämtliche Empfänger E1 bis En angeschlossen sind, werden die von den Satelliten empfangenen Navigationsdaten gesammelt und ausgewertet. Dabei werden die zeitlich möglicherweise asynchron ankommenden Pseudorangedaten mit Hilfe eines geeigneten Filters fusioniert. Typische Filter zur Durchführung dieser Aufgabe sind in der Literatur beispielsweise als sogenannte "Tightly-Coupled Filter" hinreichend beschrieben.

Die von der Verarbeitungseinheit 30 ermittelten Positions- und/oder Geschwindigkeitsdaten für das Gerät 2 werden an eine Ausgabeeinrichtung 38, zum Beispiel eine Anzeigeeinheit, weitergegeben.

Die Empfänger E1 bis En können zudem so ausgestaltet sein, dass sie in der Lage sind, zeitliche Änderungen der von ihnen ermittelten Pseudoranges als sogenannte Deltaranges zu ermitteln und an die Verarbeitungseinheit 30 zu übertragen. Des Weiteren können die Empfänger E1 bis En auch so ausgestaltet sein, dass sie Trägerphasendaten an die Verarbeitungseinheit 30 übertragen. Durch Verwendung dieser zusätzlichen Werte im Fusionsalgorithmus kann die Genauigkeit der Positionsbestimmung beziehungsweise der Geschwindigkeitsbestimmung gesteigert werden.

Besitzen die Empfänger die Möglichkeit, sich gegenseitig zu synchronisieren, steigert dies ebenfalls die Genauigkeit der Positions- beziehungsweise Geschwindigkeitsbestimmung.

Es können der Verarbeitungseinheit 30 auch noch Daten weiterer Sensoren, wie zum Beispiel Beschleunigungsdaten und/oder Drehratendaten zugeführt werden, wie durch den Pfeil 36 symbolisiert ist. Werden diese Daten ebenfalls bei der Datenfusion berücksichtigt, so führt dies zu einer weiteren Verbesserung der Genauigkeit der Positionsbestimmung beziehungsweise der Geschwindigkeitsbestimmung.

In der Verarbeitungseinheit 30 sind bevorzugt auch sogenannte Integritätsmonitore vorgesehen, mittels derer die der Verarbeitung zugeführten Bahndaten eines jeweiligen Satelliten einem Integritätstest unterzogen werden, in welchem sie auf Plausibilität untersucht werden. So kann verhindert werden, dass stark abweichende Pseudorange-Daten in die im Filter durchgeführte Datenfusion eingehen. Auch hierdurch wird die Genauigkeit des Ergebnisses verbessert.

Sind die einzelnen Antennen A1 bis An beziehungsweise 22, 24, 26 um einen deutlichen Abstand voneinander versetzt, so kann es erforderlich sein, zur Erhöhung der Genauigkeit der jeweiligen Pseudoranges eine Kompensation der unterschiedlichen Antennenpositionen vorzunehmen. Hierzu ist eine navigierte Orientierung des Geräts im Raum erforderlich. Bei bekannter Lage des Geräts im Raum kann die jeweilige Differenz der Antennenpositionen kompensiert werden, so dass die von zwei deutlich voneinander beabstandeten Antennen eingefangenen Signale eines Navigationssatelliten nicht zu unterschiedlichen Pseudoranges führen.

Wird einer der Empfänger E1 bis En durch einen Störsender oder durch Signalreflexionen gestört, so ist möglicherweise keine Pseudorangebestimmung zu einem Satelliten durch diesen Empfänger mehr möglich. Aufgrund der Anordnung von mehreren Antennen 22, 24, 26 beziehungsweise A1 bis An am Gerät 2 und das Vorsehen von diesen jeweils zugeordneten Empfängern E1 bis En wird jedoch die Funktion der anderen, nicht gestörten Empfänger in der Regel nicht behindert. Eine ausreichende Anzahl von ermittelten Pseudoranges zu einem Satelliten durch die verbleibenden Empfänger vorausgesetzt, kann trotz der Störung eine Positionsbestimmung beziehungsweise eine Geschwindigkeitsbestimmung durchgeführt werden. Vom Anmelder durchgeführte Untersuchungen zeigen, dass über einen begrenzten Zeitraum zwei Pseudoranges dafür ausreichend sind; über einen längeren Zeitraum werden vier Pseudoranges benötigt.

Liefern mehrere Empfänger Pseudoranges für denselben Satelliten, so kann diese Information zur Genauigkeitssteigerung verwendet werden.

Bei einem bevorzugten erfindungsgemäßen Verarbeitungsalgorithmus werden für jede Pseudorange-Messung eines beliebigen Satelliten die folgenden Schritte durchgeführt:
- Auslesen der Pseudorange-Messung des jeweiligen Empfängers,
- Korrektur der verschiedenen Antennenpositionen (sofern eine Schätzung der Orientierung des Geräts bekannt ist),
- Bestimmung der Bahndaten der zugehörigen Satelliten für den Zeitpunkt der Messung,
- Integritätstest (Ist die Messung plausibel? Wenn nicht, dann verwerfe sie),
- Fusionieren der Messung, zum Beispiel durch einen Tightly-Coupled-Algorithmus, wobei eventuell Daten weiterer Sensoren, wie beispielsweise Drehratensensoren und/oder Beschleunigungssensoren, zusätzlich zu den von den Empfängern gelieferten Daten verwendet werden.

Die Verarbeitung der Daten kann sinngemäß unter Verwendung von Entfernungsinformationen (Pseudoranges, Trägerphasendaten) und/oder Relativgeschwindigkeitsinformationen (Deltaranges, Dopplerdaten) erfolgen. Das Ziel des erfindungsgemäßen Verfahrens kann sinngemäß die Bestimmung der Position des Geräts und/oder die (vektorielle) Geschwindigkeit des Geräts sein.

### Bezugszeichenliste

Es bezeichnen:
- 1: Flugkörper
- 2: Gerät
- 10: Rumpf
- 11: Spitze des Flugkörpers
- 12: Antennenanordnung
- 13: Propeller
- 20: Rumpf
- 22: Antenne
- 22': sensitiver Bereich
- 24: Antenne
- 24': sensitiver Bereich
- 26: Antenne
- 26': sensitiver Bereich
- 30: Verarbeitungseinheit
- 32: Rechner
- 34: Fusionseinrichtung
- 36: Datenzuführung (Beschleunigungs-/Drehratendaten)
- 38: Ausgabeeinrichtung

- α: Empfangswinkel
- β: Öffnungswinkel

## Patentansprüche

1. Vorrichtung zur Bestimmung von Position und/oder Geschwindigkeit eines Geräts (2) in einem System zur Satellitennavigation, das eine Mehrzahl von Navigationssatelliten aufweist, die Navigationsdaten enthaltende Funksignale aussenden, wobei die Vorrichtung versehen ist mit:
- zumindest zwei Antennen (22, 24, 26) zum Empfangen der die Navigationsdaten enthaltenden Funksignale, wobei die Antennen (22, 24, 26) sensitive Empfangsbereiche (22', 24', 26') aufweisen, die in unterschiedliche Richtungen ausgerichtet sind, sodass die Antennen (22, 24, 26) jeweils Funksignale aus einer anderen der unterschiedlichen Richtungen empfangen;
- wobei jeder Antenne (22, 24, 26; A1, A2, ..., An) ein Empfänger (E1, E2, ..., En) für die Navigationsdaten enthaltende Funksignale zugeordnet ist, der die Navigationsdaten aus den empfangenen Funksignalen ermittelt;
- wobei eine Verarbeitungseinheit (30) vorgesehen ist, der die von den Empfängern ermittelten Daten zugeführt werden und die zur Bestimmung von Position und/oder Geschwindigkeit aus diesen Daten und zur Übergabe der Positions- und/oder Geschwindigkeitsdaten an eine Ausgabeeinrichtung (38) ausgebildet ist, und
- wobei die Verarbeitungseinheit (30) eine Fusionseinrichtung (34) zur Datenfusion der von den Empfängern zugeführten Daten aufweist,
**dadurch gekennzeichnet,**
- **dass** in der Verarbeitungseinheit (30) Integrationsmonitore vorgesehen sind, mittels derer die von den jeweiligen Empfängern der Verarbeitung zugeführten Bahndaten eines jeweiligen Satelliten einem Integritätstest unterzogen werden, in welchem sie vor der Weiterleitung an die Fusionseinrichtung auf Plausibilität untersucht werden.

2. Vorrichtung nach Anspruch 1,
**dadurch gekennzeichnet,**
**dass** die Antennen (22, 24, 26) so ausgestaltet und angeordnet sind, dass die jeweiligen sensitiven Empfangsbereiche (22', 24', 26') der Antennen (22, 24, 26) einander überlappen.

3. Vorrichtung nach Anspruch 1,
**dadurch gekennzeichnet,**
**dass** die Antennen (22, 24) so ausgestaltet und angeordnet sind, dass die jeweiligen sensitiven Empfangsbereiche (22', 24') der Antennen (22, 24) einander nicht überlappen.

4. Vorrichtung nach einem der vorhergehenden Ansprüche,
**dadurch gekennzeichnet,**
**dass** die jeweiligen Empfänger so ausgebildet sind, dass sie aus den ermittelten Navigationsdaten die Entfernung zu dem jeweiligen Navigationssatelliten als sogenannte Pseudoranges bestimmen und diese der Verarbeitungseinheit (30) zuführen.

5. Vorrichtung nach einem der vorhergehenden Ansprüche,
**dadurch gekennzeichnet,**
**dass** die Empfänger so ausgebildet sind, dass sie sich gegenseitig synchronisieren.

6. Vorrichtung nach einem der vorhergehenden Ansprüche,
**dadurch gekennzeichnet,**
**dass** die Empfänger so ausgebildet sind, dass sie die zeitlichen Änderungen der jeweiligen Pseudoranges als sogenannte Deltaranges bestimmen und diese Deltaranges der Verarbeitungseinheit (30) zuführen.

7. Verfahren zur Bestimmung von Position und/oder Geschwindigkeit eines Geräts in einem System zur Satellitennavigation, insbesondere mit einer Vorrichtung nach einem der vorhergehenden Ansprüche, mit den Schritten:
a) Empfangen von Navigationsdaten enthaltenden Funksignalen mehrerer Satelliten durch zumindest zwei jeweils einer separaten Antenne zugeordnete Empfänger;
b) Ermitteln der Navigationsdaten aus den vom jeweiligen Empfänger empfangenen Funksignalen;
c) Bestimmen der Entfernungen zu dem jeweiligen Satelliten als sogenannte Pseudoranges aus den jeweils im Schritt b) ermittelten Navigationsdaten;
d) Bestimmen der Bahndaten des zugehörigen Satelliten für den Zeitpunkt des Empfangs der Navigationsdaten;
e) Fusionieren der aus den Navigationsdaten der unterschiedlichen Empfänger bestimmten Pseudoranges eines jeweiligen Satelliten zu einer fusionierten Pseudorange für die jeweiligen Satelliten und
f) Bestimmen von Position und/oder Geschwindigkeit des Geräts aus den Bahndaten und den fusionierten Pseudoranges der jeweiligen Satelliten;
**dadurch gekennzeichnet,**
**dass** die im Schritt d) bestimmten Bahndaten eines jeweiligen Satelliten einem Integritätstest unterzogen werden, in welchem sie auf Plausibilität untersucht werden, und
**dass** die aus den Funksignalen des jeweiligen Satelliten vom jeweiligen Empfänger ermittelten Navigationsdaten und die daraus bestimmten Pseudoranges nur dann zur Weiterverarbeitung in den darauffolgenden Schritten verwendet werden wenn sie den Integritätstest bestanden haben.

8. Verfahren nach Anspruch 7,
**dadurch gekennzeichnet,**
**dass** die Datenfusion im Schritt e) durch einen sogenannten TightlyCoupled-Algorithmus erfolgt.

9. Verfahren nach Anspruch 7 oder 8,
**dadurch gekennzeichnet,**
**dass** bei der Datenfusion im Schritt e) Daten weiterer Sensoren, vorzugsweise von Drehraten- und/oder Beschleunigungssensoren, berücksichtigt werden.

## Claims

1. Device for determining the position and/or speed of an apparatus (2) in a system for satellite navigation which comprises a plurality of navigation satellites which transmit radio signals containing navigation data, wherein the device is provided with:
- at least two antennas (22, 24, 26) for receiving the navigation data-containing radio signals, wherein the antennas (22, 24, 26) comprise sensitive reception regions (22', 24', 26') which are oriented in different directions so that the antennas (22, 24, 26) each receive radio signals from another of the different directions;
- wherein each antenna (22, 24, 26; A1, A2, ..., An) is allocated a receiver (E1, E2, ..., En) for the navigation data-containing radio signals, which receiver detects the navigation data from the received radio signals;
- wherein a processing unit (30) is provided which is supplied with the data detected by the receivers and which is designed to determine the position and/or speed from these data and to transfer the position and/or speed data to an output device (38), and
- wherein the processing unit (30) comprises a merging device (34) for data-merging of the data supplied by the receivers,
**characterised in that**,
- in the processing unit (30) integration monitors are provided by means of which the orbit data of a respective satellite supplied by the respective receivers for processing are subjected to an integrity test in which they are examined for plausibility prior to forwarding to the merging device.

2. Device as claimed in claim 1, **characterised in that** the antennas (22, 24, 26) are designed and arranged in such a way that the respective sensitive reception regions (22', 24', 26') of the antennas (22, 24, 26) overlap with one another.

3. Device as claimed in claim 1, **characterised in that** the antennas (22, 24) are designed and arranged in such a way that the respective sensitive reception regions (22', 24') of the antennas (22, 24) do not overlap with one another.

4. Device as claimed in any one of the preceding claims, **characterised in that** the respective receivers are designed in such a way that, from the detected navigation data, they determine the distance to the respective navigation satellite as so-called pseudo-ranges and supply same to the processing unit (30).

5. Device as claimed in any one of the preceding claims, **characterised in that** the receivers are designed in such a way that they are synchronised with each other.

6. Device as claimed in any one of the preceding claims, **characterised in that** the receivers are designed in such a way that they determine the changes in respect of time in the respective pseudo-ranges as so-called delta-ranges and supply these delta-ranges to the processing unit (30).

7. Method for determining the position and/or speed of an apparatus in a system for satellite navigation, in particular with a device as claimed in any one of the preceding claims, comprising the steps of:
a) receiving navigation data-containing radio signals from a plurality of satellites by at least two receivers each allocated to a separate antenna;
b) detecting the navigation data from the radio signals received by the respective receiver;
c) determining the distances to the respective satellite as so-called pseudo-ranges from the navigation data detected in each case in step b);
d) determining the orbit data of the associated satellite for the time of reception of the navigation data;
e) merging the pseudo-ranges of a respective satellite determined from the navigation data of the different receivers to form a merged pseudo-range for the respective satellites and
f) determining the position and/or speed of the apparatus from the orbit data and the merged pseudo-ranges of the respective satellites;
**characterised in that**,
the orbit data of a respective satellite determined in step d) are subjected to an integrity test in which they are examined for plausibility, and
the navigation data detected from the radio signals of the respective satellite by the respective receiver and the pseudo-ranges determined therefrom are used for further processing in the subsequent steps only when they have passed the integrity test

8. Method as claimed in claim 7, **characterised in that** the data-merging in step e) is carried out by a so-called tightly coupled algorithm.

9. Method as claimed in claim 7 or 8, **characterised in that** during the data-merging in step e) data from further sensors, preferably from rotation rate and/or acceleration sensors, are considered.

## Revendications

1. Dispositif de détermination de la position et/ou de la vitesse d'un appareil (2) dans un système pour la navigation par satellites, qui présente une pluralité de satellites de navigation qui émettent des signaux radio contenant des données de navigation, lequel dispositif étant muni :
- d'au moins deux antennes (22, 24, 26) pour la réception des signaux radio contenant les données de navigation, les antennes (22, 24, 26) présentant des zones de réception sensitives (22', 24', 26') qui sont orientées dans différentes directions de sorte que les antennes (22, 24, 26) reçoivent respectivement des signaux radio provenant d'une autre des différentes directions ;
- dans lequel dispositif un récepteur (E1, E2, ..., En) pour les signaux radio contenant les données de navigation est associé à chaque antenne (22, 24, 26; A1**,** A2, ..., An), lequel détermine les données de navigation à partir des signaux radio reçus ;
- dans lequel une unité de traitement (30) est ménagée, à laquelle sont amenées les données déterminées par les récepteurs et laquelle est réalisée pour déterminer la position et/ou la vitesse à partir de ces données et pour transmettre les données de position et/ou de vitesse à un dispositif de sortie (38), et
- dans lequel l'unité de traitement (30) présente un dispositif de fusion (34) pour la fusion de données des données amenées par les récepteurs,
**caractérisé en ce**
- **que** des moniteurs d'intégration sont ménagés dans le dispositif de traitement (30), au moyen desquels les données de trajectoire d'un satellite respectif, amenées aux récepteurs respectifs, sont soumises à un test d'intégrité, dans lequel elles sont examinées quant à leur plausibilité avant la transmission au dispositif de fusion.

2. Dispositif selon la revendication 1,
**caractérisé en ce que**
les antennes (22, 24, 26) sont conçues et disposées de manière à ce que les zones de réception respectives sensitives (22', 24', 26') des antennes (22, 24, 26) se chevauchent mutuellement.

3. Dispositif selon la revendication 1,
**caractérisé en ce que**
les antennes (22, 24, 26) sont conçues et disposées de manière à ce que les zones de réception respectives sensitives (22', 24', 26') des antennes (22, 24, 26) ne se chevauchent pas mutuellement.

4. Dispositif selon l'une quelconque des revendications précédentes,
**caractérisé en ce**
**que** les récepteurs respectifs sont réalisés de manière à ce qu'à partir des données de navigation déterminées, ils déterminent la distance vers les satellites de navigation respectifs en tant que dites pseudo-distances et amènent celles-ci à l'unité de traitement (30).

5. Dispositif selon l'une quelconque des revendications précédentes,
**caractérisé en ce**
**que** les récepteurs sont réalisés de manière à ce qu'ils se synchronisent réciproquement.

6. Dispositif selon l'une quelconque des revendications précédentes,
**caractérisé en ce**
**que** les récepteurs sont réalisés de manière à ce qu'ils déterminent les modifications temporelles des dites pseudo-distances en tant que dites delta-distances et amènent ces delta-distances à l'unité de traitement (30).

7. Procédé de détermination de la position et/ou de la vitesse d'un appareil dans un système de navigation satellite, notamment avec un dispositif selon l'une quelconque des revendications précédentes, comprenant les étapes :
a) réception de signaux radio contenant des données de navigation de plusieurs satellites au moyen d'au moins deux récepteurs associés à respectivement une antenne séparée ;
b) détermination des données de navigation à partir des signaux radio reçus par le récepteur respectif ;
c) détermination des distances vers les satellites respectifs en tant que dites pseudo-distances à partir des données de navigation déterminées à l'étape b) :
d) détermination des données de trajectoire du satellite correspondant pour le moment de la réception des données de navigation ;
e) fusionnement des pseudo-distances déterminées à partir des données de navigation des différents récepteurs d'un satellite respectif en une pseudo-distance fusionnée pour les satellites respectifs, et
f) détermination de la position et/ou de la vitesse de l'appareil à partir des données de trajectoire et des pseudo-distances fusionnées des satellites respectifs;
**caractérisé en ce**
**que** les données de trajectoire déterminées à l'étape d) d'un satellite respectif sont soumises à un test d'intégrité, dans lequel elles sont examinées quant à leur plausibilité, et
en ce que les données de navigation déterminées par le récepteur respectif à partir des signaux radio du satellite respectif et les pseudo-distances qui en sont déterminées ne sont utilisées pour le traitement dans les étapes suivantes que si elles ont réussi le test d'intégrité.

8. Procédé selon la revendication 7,
caractérisé en ce
la fusion des données à l'étape e) est réalisée au moyen d'un dit algorithme tightly coupled.

9. Procédé selon la revendication 7 ou 8,
**caractérisé en ce**
**que** lors de la fusion des données à l'étape e), les données d'autres capteurs, de préférence de capteurs de rotation et/ou d'accélération, sont prises en compte.
